(19)

Europäisches
Patentamt
European
Patent Office
Office européen
des brevets

(11) **EP 2 420 169 A1**

(12) **EUROPEAN PATENT APPLICATION**

(43) Date of publication:
**22.02.2012 Bulletin 2012/08**

(51) Int Cl.:
**A47L 9/00** *(2006.01)*        **A47L 9/28** *(2006.01)*

(21) Application number: **10173355.8**

(22) Date of filing: **19.08.2010**

<table>
<tr><td>

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(71) Applicant: **Koninklijke Philips Electronics N.V.**
**5621 BA Eindhoven (NL)**

</td><td>

(72) Inventors:
• **Janssens, Gijs**
  **5600 AE, Eindhoven (NL)**
• **Boven, Hendrik-Jan**
  **5600 AE, Eindhoven (NL)**

(74) Representative: **Damen, Daniel Martijn**
  **Philips**
  **Intellectual Property & Standards**
  **P.O. Box 220**
  **5600 AE Eindhoven (NL)**

</td></tr>
</table>

(54) **Cleaning device as well as a method to control a cleaning device**

(57)     A cleaning device (1) comprises a base (2) provided with drive means and steering means to drive and steer the cleaning device along a path with a desired centre of curvature (C1,C2,C3) over the surface to be cleaned. The cleaning device (1) further comprises at least cleaning unit provided with at least one cleaning nozzle (7). The cleaning nozzle (7) is pivotable with respect to the base (2) about a pivot axis (10). The base (2) is steerable over the surface to be cleaned for pivoting about the centre of curvature (10,Cots) which is located substantially on the pivot axis (10).

The invention also relates to a method to control such a cleaning device (1).

Fig. 1

EP 2 420 169 A1

**Description**

FIELD OF THE INVENTION

The invention relates to a cleaning device comprising a base provided with drive means and steering means to drive and steer the cleaning device along a path with a desired centre of curvature over a surface to be cleaned, which cleaning device further comprises at least a cleaning unit provided with at least one cleaning nozzle.

The invention also relates to a method to control a cleaning device comprising a base provided with drive means and steering means to drive and steer the cleaning device along a path with a desired centre of curvature over a surface to be cleaned, which cleaning device further comprises at least a cleaning unit provided with at least one cleaning nozzle.

BACKGROUND OF THE INVENTION

Such a cleaning device is known from US2008/0222837A1. By the cleaning device disclosed in US2008/0222837A1, the base comprises wheels, each having its own drive motor. By rotating the wheels by means of the drive motors travel movements over the surface to be cleaned are possible. The cleaning device comprises a suction mouth nozzle which has a fixed position with respect to the wheels. When the wheels are being rotated in the same direction at different but constant speeds, the cleaning device will be forced to follow a circular path around a centre of curvature. When encircling an object located on the surface in this manner one time, a relatively large area around the object will remain uncleaned. Such an object might for example be a leg of a chair or a table. By the known cleaning device cleaning around such an object is only possible by moving along the object a number of times and along non-circular paths.

SUMMARY OF THE INVENTION

It is an object of the invention to provide a cleaning device of the above mentioned kind being able to clean an area around an object in a simple and efficient manner.

This object is achieved by the cleaning device according to the invention in that the cleaning nozzle is pivotable with respect to the base about a pivot axis, whilst the base is steerable over the surface to be cleaned for pivoting about the centre of curvature which is located substantially on the pivot axis.

In this manner, it is possible to pivot the base about the pivot axis over the surface, whilst maintaining the cleaning nozzle on the same spot with respect to the surface, since the base is also pivotable with respect to the cleaning nozzle about the pivot axis.

The base can thus be re-orientated to a new driving direction with respect to the cleaning nozzle standing still on the surface, after which the cleaning nozzle device can be moved over the surface according to this new driving direction.

In an embodiment of the cleaning device according to the invention the cleaning unit has a perimeter encompassing the cleaning nozzle, whilst the base is steerable over the surface to be cleaned about the centre of curvature which is located substantially on the perimeter.

When the cleaning device has to turn around a corner of an object, the centre of curvature will be located on this corner. By pivoting the cleaning nozzle with respect to the base the perimeter of the cleaning unit can be positioned against the corner. Subsequently the base is being steered about the centre of curvature, whilst maintaining the perimeter against the corner. In this manner an efficient cleaning of the surface near the corner is realized.

The ability of pivoting the cleaning nozzle with respect to the base makes it also possible to move the cleaning nozzle as close as possible to another centre of curvature which is located somewhere above the surface to be cleaned, outside the cleaning device. To be able to pivot the cleaning nozzle toward the centre of curvature, the cleaning nozzle is located at a distance of the pivot axis so that the cleaning nozzle can pass the parts of the drive means like wheels when being pivoted. In case of a round leg of a table, for example, if the centre of curvature is determined to be located on the axis of the leg, the perimeter of the cleaning unit, as close as possible to the cleaning nozzle can be located against the leg, wherein the whole surface around and near the leg will be cleaned by encircling the leg by means of the cleaning device only once.

To minimize the distance over which the base need to be moved to encircle an object, the centre of curvature is located as close as possible to the base. The distance between the part of the cleaning nozzle located close to the centre of curvature and the centre of curvature itself depends on the dimension of the object around which the surface need to be cleaned and is preferably as small as possible.

It is also possible to encircle a relatively small object like a square leg by means of one circular shaped turn of the wheels around the leg, wherein the speed of cleaning is relatively high but it is accepted that only the major part around the leg is being cleaned. However, by such relatively small objects the remaining uncleaned parts are relatively small. If the cleaning device should fully encircle an object in one single turn, first the centre of curvature is to be determined. Of course it is also possible to only partly move around an object.

In an embodiment of the cleaning device according to the invention the drive means comprises at least two wheels being rotatable about a rotation axis, wherein the pivot axis substantially intersects the rotation axis amid the two wheels.

With such location of the pivot axis, it is relatively easy to control the turning of the cleaning device around the centre of curvature. Furthermore, the cleaning nozzle can stand still, whilst the base is being pivoted with respect to the cleaning nozzle by rotating the wheels at the same angular velocity but in opposite directions.

It is possible to first position the cleaning device with respect to the predetermined centre of curvature so that the centre of curvature is located on the rotation axis, after which the cleaning nozzle is being pivoted with respect to the cleaning nozzle in the direction of the centre of curvature and as close as possible to the centre of curvature, wherein the perimeter of the cleaning unit is located on the centre of curvature or against the object around which the surface hold be cleaned. Subsequently the cleaning device can be turned around the centre of curvature.

Preferably the pivot axis extends substantially perpendicular to the rotation axis so that in each pivoted position of the cleaning nozzle the contact with and distance to the surface to be cleaned is the same.

In another embodiment of the cleaning device according to the invention, the cleaning nozzle has a rectangular shape extending along a longitudinal axis, wherein the cleaning nozzle is pivotable with respect to the base to a position wherein the centre of curvature is located on the longitudinal axis of the cleaning nozzle.

With such a rectangular cleaning nozzle a relatively wide area can be cleaned at once. When the centre of curvature is located on the longitudinal axis of the cleaning nozzle, while turning the cleaning device around the centre of curvature, a relatively large ring shaped area will be cleaned. In any other position of the rectangular cleaning nozzle with respect to the base, the cleaned ring-shaped area will be smaller.

In another embodiment of the cleaning device according to the invention, the cleaning device comprises at least one sensor to obtain information about the environment to be cleaned, wherein by means of the sensor and the controller a point in the environment outside the cleaning device is determined to be allocated as the centre of curvature.

By means of sensors the surrounding of the cleaning device can easily be analyzed and the location and dimension of objects on the surface to be cleaned can be determined. By the controller the centre of curvature can be allocated inside an object around which the surface needs to be cleaned.

In yet another embodiment of the cleaning device according to the invention, the cleaning nozzle is pivotable with respect to the base over an angle of at least about 90 degrees, preferably at least 180 degrees and more preferably at least 360 degrees.

When the cleaning nozzle is pivotable with respect to the base over an angle of at least about 90 degrees, the cleaning nozzle can, for example, be pivoted from a position in front of wheels of the drive means to a position next to one of the wheels to clean the area near the wheel. In case of a rectangular cleaning nozzle the longitudinal axis will extend parallel to the wheel, when the cleaning nozzle is located next to one of the wheels. Also in this position, it is possible to turn the cleaning device around the centre of curvature.

When the cleaning nozzle is pivotable with respect to the base over an angle of at least about 180 degrees, the cleaning nozzle can, for example, be pivoted from a position in front of the wheels to positions next to each wheel.

When the cleaning nozzle is pivotable with respect to the base over an angle of at least 360 degrees, the cleaning nozzle can be pivoted around the base to any desired position.

In a further embodiment of the cleaning device according to the invention, the cleaning device comprises at least one supporting roller located at a distance of the wheels.

The two wheels and the supporting roller (for example a castor wheel) will act as three supports of the base on the surface to be cleaned. Preferably the centre of gravity is located between the wheels and the supporting roller, in which case no further supporting means for the base are necessary. Such a castor wheel will easily follow the movements of the wheels.

In yet a further embodiment of the cleaning device according to the invention, the cleaning device comprises two rectangular cleaning nozzles extending substantially perpendicular to each other.

Such orientation of two rectangular cleaning nozzles makes it relatively easy to clean a corner of a room. The cleaning nozzles can be pivoted with respect to the base to a position wherein each cleaning nozzle extends parallel to one of the walls of the corner of the room. Furthermore, when changing from turning around a centre of curvature located on the side of the first wheel to turning around a centre of curvature located on the side of the second wheel, the cleaning nozzles need only to be pivoted over a relatively small angle.

In a further embodiment of the cleaning device according to the invention, each wheel is provided with a motor, wherein the motors are controllable by means of the controller.

With a motor for each wheel, the speeds of the two wheels can easily be controlled.

The invention also relates to a method to control such a cleaning device, wherein, the cleaning nozzle is pivotable with respect to the base about a pivot axis, whilst the base is being steered over the surface to be cleaned for pivoting about the centre of curvature which is located substantially on the pivot axis.

By such a method cleaning of an area around an object on a surface to be cleaned can be done much faster and with less movements of the cleaning device.

BRIEF DESCRIPTION OF THE DRAWINGS

The invention will be explained in more detail with reference to the drawings, in which

Figure 1 is a schematic top view of a first embodiment of a cleaning device according to the invention,
Figure 2 is a schematic top view of the cleaning device as shown in figure 1, with different centers of curvature,
Figure 3 is a schematic top view of the cleaning device as shown in figure 1, with the cleaning nozzle in a pivoted position with respect to the base, when moving around a relatively small object,
Figures 4A-4E are schematic top views of the cleaning device similar to the cleaning device as shown in figure 1, when moving around a relatively large object,
Figure 5 is a schematic top view of the cleaning device as shown in figure 1, provided with a sensor,
Figure 6 is a schematic top view of a second embodiment of a cleaning device according to the invention,
Figure 7 is a schematic top view of a third embodiment of a cleaning device according to the invention,
Figures 8A-8D are schematic top views of the cleaning device as shown in figure 7, when cleaning a corner of a room,
Figures 9A-9F are schematic top views of the cleaning device as shown in figure 7, when moving around a relatively large object,
Figure 10 is a schematic top view of a fourth embodiment of a cleaning device according to the invention,
Figures 11A-13B are schematic top views and side views of further embodiments of cleaning devices according to the invention,
Figures 14A-14E are schematic top views of a fifth embodiment of the cleaning device, when moving around a corner of an object.

Like parts are indicated by the same reference numbers in the figures.

DETAILED DESCRIPTION OF EMBODIMENTS

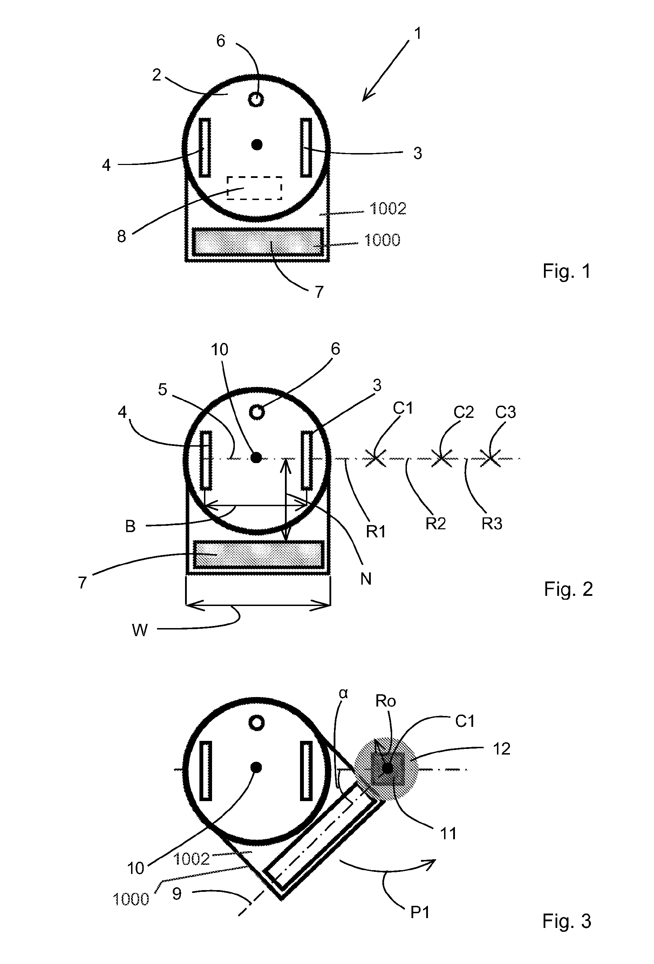

Figures 1-3 show different views of a first embodiment of a cleaning device 1 according to the invention. The cleaning device 1 comprises a base 2 provided with two wheels 3, 4 being rotatable about a rotation axis 5 and a supporting roller 6 located at a distance of the rotation axis 5. The cleaning device 1 is furthermore provided with cleaning unit 1002 comprising a rectangular cleaning nozzle 7 and with a controller 8. The cleaning unit 1002 has a perimeter 1000 encompassing the cleaning unit 7.

Each wheel 3, 4 is rotatable by means of a motor (not shown), which motors are controlled by the controller 8 to rotate each of the wheels 3, 4 at the desired angular speed $\omega 1$, $\omega 2$ respectively. The speed of each wheel 3, 4 at the surface to be cleaned is $v1 = \omega 1*r$, $v2 = \omega 2*r$ respectively, with r being the radius of the wheels 3, 4. The distance between the wheels 3, 4 is B.

The rectangular cleaning nozzle 7 extending along a longitudinal axis 9 is located at a distance N of the rotation axis 5 (see figure 2) and the perimeter 1000 at the level of the nozzle has a width W. The cleaning unit 1000 and nozzle 7 are pivotable with respect to the base 2 and the wheels 3, 4 about a pivot axis 10 by means of a nozzle drive (not shown) controlled by the controller 8. The pivot axis 10 extends perpendicular to the rotation axis 5 and intersects the rotation axis 5 in the middle between the wheels 3, 4.

If the cleaning device 1 should make a turn around a centre of curvature C1 located at a distance R1 of the wheel 3 and R1+B of the wheel 4 at an angular speed $\omega$, the relation between the angular speeds $\omega 1$, $\omega 2$ of the wheels 3, 4 can be expressed as follows:

$$\omega = v1/R1 = v2/(R1+B)$$

thus

$$(\omega 1*r)/R1 = (\omega 2*r)/(R1+B)$$

thus

$$\omega 2 = \omega 1 * (R1+B)/R1$$

To let the longitudinal axis 9 intersect with the centre of curvature C1, the cleaning nozzle 7 has to be rotated about the pivot axis 10 over an angle $\alpha$ which can be determined as follows:

$$\sin \alpha = N/ (R1+0,5*B)$$

The angle $\alpha$ is also the angle between the longitudinal axis 9 and the rotation axis 5.

If the cleaning device 1 has to make a turn about the centre of curvature C2 or C3 located at a distance R2, R3 respectively of the wheel 3, the required relation between the angular speeds of the wheels 3, 4 and the angle $\alpha$ can easily be obtained from the above given equations. In the same manner the cleaning device 1 can make turn about centre of curvatures located next to wheel 4.

In figure 3 a square object 11 is shown, for example a leg of a chair or table, with sides of a few centimeters like 2-10 centimeters. By means of for example sensors, the dimensions of the object 11 can be determined and a centre of curvature C1 located in the centre of the object 11 can be calculated by means of the controller 8. Then the desired distance of the cleaning nozzle 7 with respect to object 11 is determined so that by simply turning the cleaning device 1 once around the centre of curvature C1 in the direction as indicated by arrow P1, the cleaning nozzle 7 will just pass around the corners of the square object 11. In this example the distance is the radius Ro of the circle in which the object just fits (under negligence of a little distance between the nozzle 7 and the perimeter 1000 of the cleaning unit 1002). Based on the dimensions of the cleaning device 1 and the radius Ro, the distance R1+0,5B between the centre of curvature C1 and the pivot axis 10 can be calculated as follows:

$$(R1+0,5B)^2 = (Ro + 0,5*W)^2 + N^2$$

Then, the angle $\alpha$ can be obtained from the above given equation.

Only the areas 12 will not be reached by the cleaning nozzle 7 during the single turn of the cleaning device 1 about the centre of curvature C1. However since the dimensions of the object 11 are relatively small, also the non-cleaned areas 12 are relatively small.

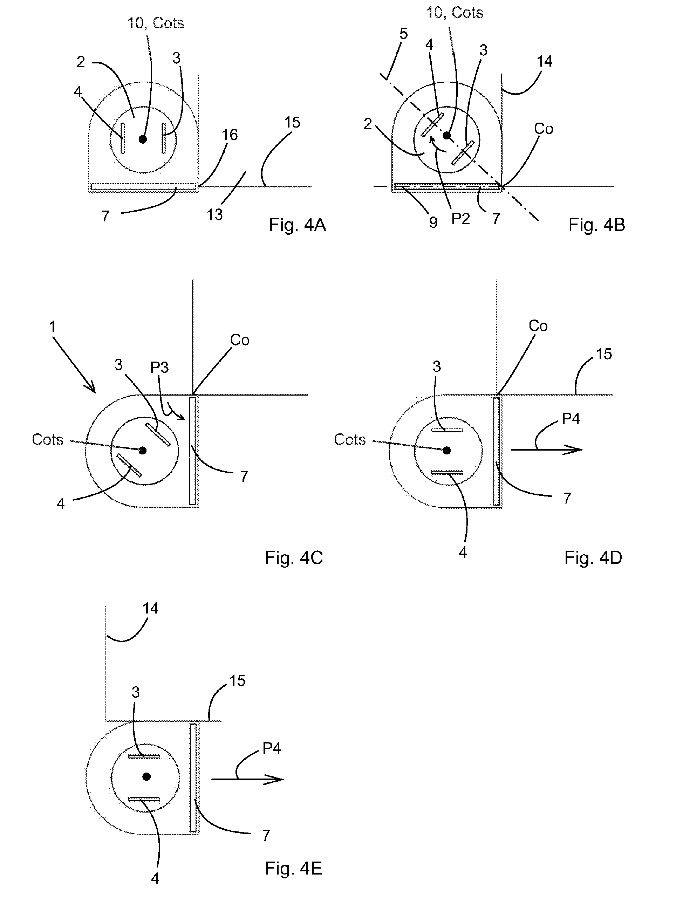

In figures 4A-4E the cleaning of a surface around a relatively large object 13 is shown. The large object 13 is for example a cupboard with a first side 14 and a second side 15 with dimensions of some decimeters, like 3-20 decimeters, so 30-200 centimeters. In such a case the cleaning device 1 can be moved along the first side 14 of object 13 (figure 4A), wherein the cleaning nozzle 7 extends perpendicular to the side 14. Near a corner 16 of the object 13 the wheels 3, 4 will be driven by means of the controller 8 to rotate at the same speed but in opposite directions to pivot the base 2 with respect to the cleaning nozzle in the direction as indicated by arrow P2. Such a rotation is called a rotation "on the spot" because the base 2 does not change its location but it is only re-orientated. The centre of curvature is in the middle between the wheels 3, 4 while rotating "on the spot"; during a rotation "on the spot" the nozzle 7 does not alter its position in the ideal situation wherein the pivot axis 10 coincides with the centre of curvature Cots between the wheels 3, 4. By the rotation in the direction indicated by P2, the centre of curvature of the base 2 coincides with the pivot axis 10. The cleaning nozzle 7 keeps standing still with respect to the object 11. The base 2 is being pivoted to a position wherein the rotation axis 5 intersects with the corner 16. This intersection point will be the new centre of curvature Co for the cleaning action of the cleaning device. The centre of curvature Co coincides with a point of the perimeter 1000 of the cleaning unit 1002 located near an end of the rectangular cleaning nozzle 7. The cleaning nozzle 7 still extends perpendicular to the side 14 (see figure 4B). The cleaning device 1 can now perform a turn in a direction as indicated by arrow P3 over 90 degrees with respect to the centre of curvature Co until the cleaning nozzle 7 extends perpendicular to the second side 15 (see figures 4C). The base 2 will again be pivoted with respect to the cleaning nozzle which cleaning nozzle stands still until the rotation axis 5 extends perpendicular to the second side 15 (see figures 4D). During this pivoting motion the centre of curvature Cots of the base 2 coincides again with the pivot axis 10 of the cleaning nozzle 7. The cleaning device 1 can now be moved along the second side 15 of object 13 (figure 4E) in the direction as indicated by arrow P4.

Since the object 13 is relatively large the additional time needed for the additional movements (figure 4B and 4D) of the wheels 3, 4 with respect to the cleaning nozzle 7 to re-orientate the base 2 with respect to the cleaning nozzle 7 is relatively small in relation to the total time needed to clean the surface around the object 13. Of course it is possible to perform these movements around relatively small objects; however, the reorientation of the base as indicated in the transition from 4A to 4B and from 4C to 4D may be too laborious in case of such small objects like a legs of a chair.

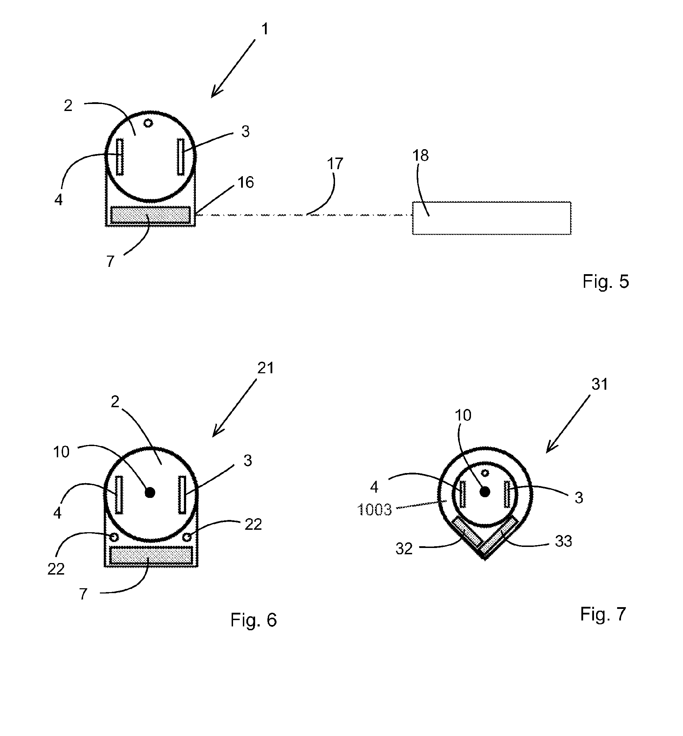

Figure 5 shows the cleaning device 1 comprising one sensor 16 at a side of the rectangular nozzle 7. By means of the sensor 16 a light beam 17 for example can be emitted and sensed when reflected from an object 18. It is also possible to use a sensor 16 which operates by means of sounds or as a kind of camera. The information obtained by means of the sensor is being used by the controller 8 to determine the positions and dimensions of objects on the surface to be cleaned. This information can be stored in the cleaning device 1 and be used when the surface has to be cleaned again.

Figure 6 shows a second embodiment of a cleaning device 21 according to the invention, which differs from the cleaning device 1 in that it comprises two supporting wheels 22 located near the cleaning nozzle 7 and pivoting together with the cleaning nozzle 7 about the pivot axis 10.

Figure 7 shows a third embodiment of a cleaning device 31 according to the invention, which differs from the cleaning device 1 in that device 31 has a cleaning unit 1003 which comprises two rectangular cleaning nozzles 32, 33. The cleaning nozzles 32, 33 extend perpendicular to each other and are simultaneously pivotable about pivot axis 10. Furthermore, when changing from turning around a centre of curvature located on the side of the wheel 3 to turning around a centre of curvature located on the side of the wheel 4, the nozzles 32, 33 need only to be pivoted over a relatively small angle.

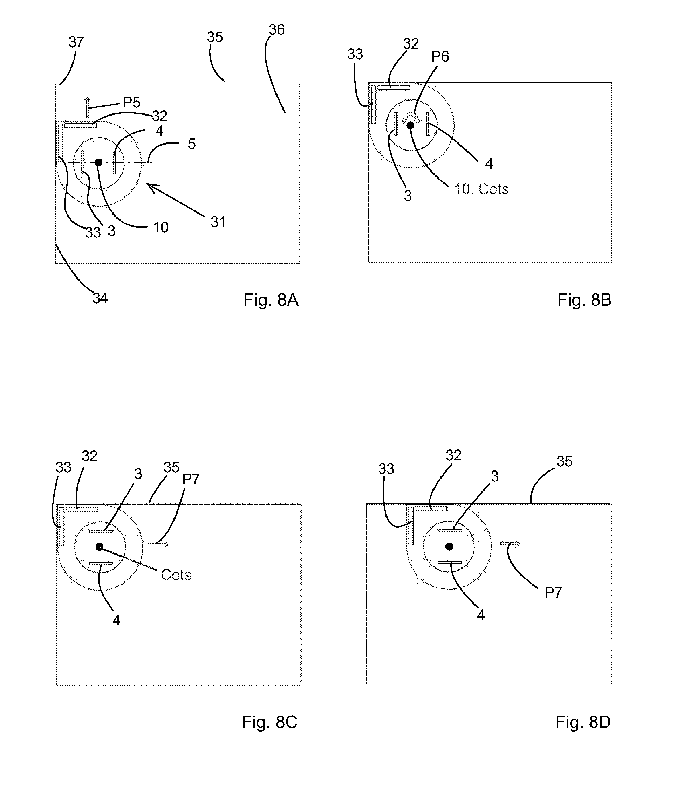

In figures 8A-8D the cleaning of a surface along walls 34, 35 of a room 36 and in a corner 37 of the room 36 by means of the cleaning device 31 is shown. The cleaning device 31 is being moved along the wall 34 (figure 8A) in the direction as indicated by arrow P5, wherein the cleaning nozzle 32 and the rotation axis 5 extends perpendicular to the wall 34. When the cleaning nozzle 32 is located close against the wall 35 near the corner 37, the wheels 3, 4 can be driven by means of the controller 8 at the same speed but in opposite directions to pivot the base in the direction as indicated by arrow P6 over 90 degrees to position the rotation axis 5 perpendicular to the wall 35 (figure 8B-8C). During the pivotal movement in the direction as indicated by arrow P6, the base is being re-orientated with respect to the cleaning nozzles 32, 33, whilst the cleaning nozzles 32, 33 remain in the same position. When the base has been re-orientated, the cleaning device 31 can be moved along the wall 35 in the direction as indicated by arrow P7, wherein cleaning is mainly done by means of the cleaning nozzle 33 extending perpendicular to the wall 34 (figures 8C and 8D). Somewhere along the wall 35, the cleaning device 31 need to be steered about a point on the perimeter of the cleaning unit near the ends of the nozzle 32, 33 over 90 degrees so that the cleaning nozzle 33 will be located against the wall 35 and the cleaning nozzle 32 will be directed towards the wall opposite wall 34. This can be done in a manner as described above.

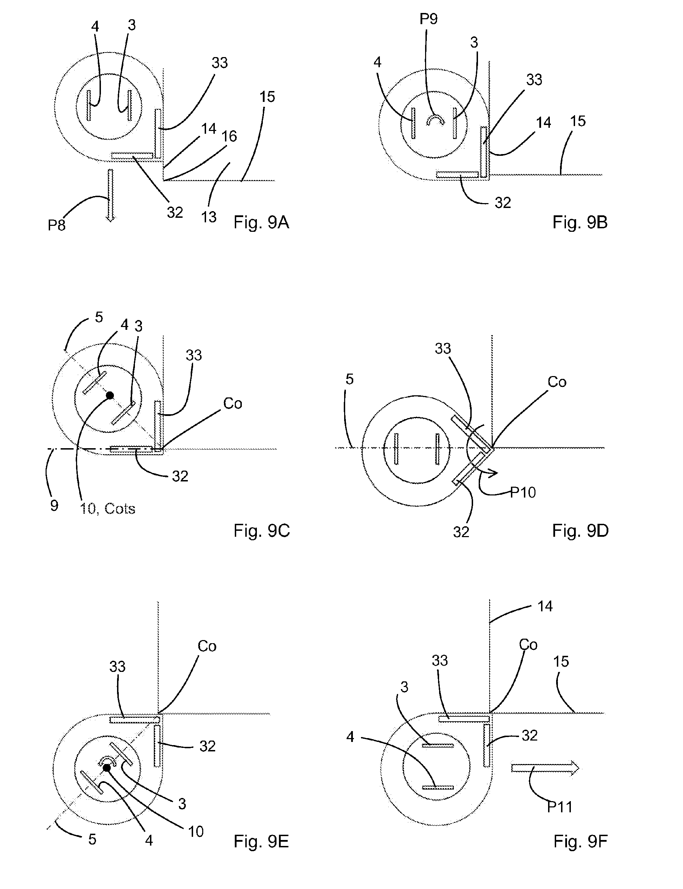

In figures 9A-9F the cleaning of a surface around a relatively large object 13 by means of a cleaning device 31 is shown. The cleaning device 31 is being moved along the first side 14 of object 13 (figure 9A) in the direction as indicated by arrow P8, wherein the cleaning nozzle 32 extends perpendicular to the side 14. Near a corner 16 of the object 13 the wheels 3, 4 can be driven by means of the controller 8 in the direction as indicated by arrow P9 to re-orientate the base whilst the cleaning nozzles 32, 33 keep standing still, until the rotation axis 5 intersects with the corner 16. The rotation according to arrow P9 is the previously rotation on the spot around centre of curvature Cots (not indicated) which coincides with pivot axis 10. The intersection point of the rotation axis 5 with the corner 6 will be the next centre of curvature Co. The cleaning nozzle 32 still extends perpendicular to the side 14 (see figure 9B and 9C). The cleaning device 1 can now perform a turn in a direction as indicated by arrow P10 over 90 degrees with respect to the centre of curvature Co until the cleaning nozzle 32 and the rotation axis 5 extend perpendicular to the second side 15 (see figures 9D, 9E and 9F). Between figures 9E and 9F the base is re-orientated again by a rotation on the spot. The cleaning device 1 can now be moved along the second side 15 of object 13 (figure 9FE) in the direction as indicated by arrow P11.

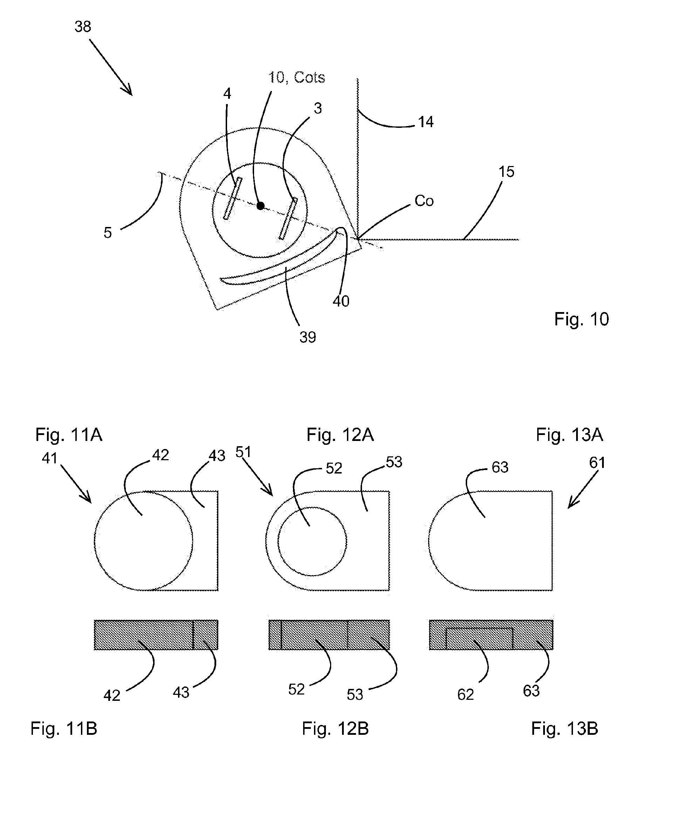

Figure 10 shows a fourth embodiment of a cleaning device 38 according to the invention, which differs from the cleaning device 1 in comprising a curved shaped cleaning nozzle 39. When turning around a centre of curvature Co, the curved shaped cleaning nozzle 39 is pivoted with respect to the wheels 3, 4 about pivot axis 10 so that an end 40 of the curved shaped cleaning nozzle 39 is as close as possible near centre of rotation.

Figures 11A-13B show several other embodiments of cleaning device 41, 51, 61 according to the invention, wherein the parts 42, 52, 62 comprising the base 2and the wheels 3, 4 and the parts 43, 53, 63 comprising the cleaning nozzle 7 have different shapes.

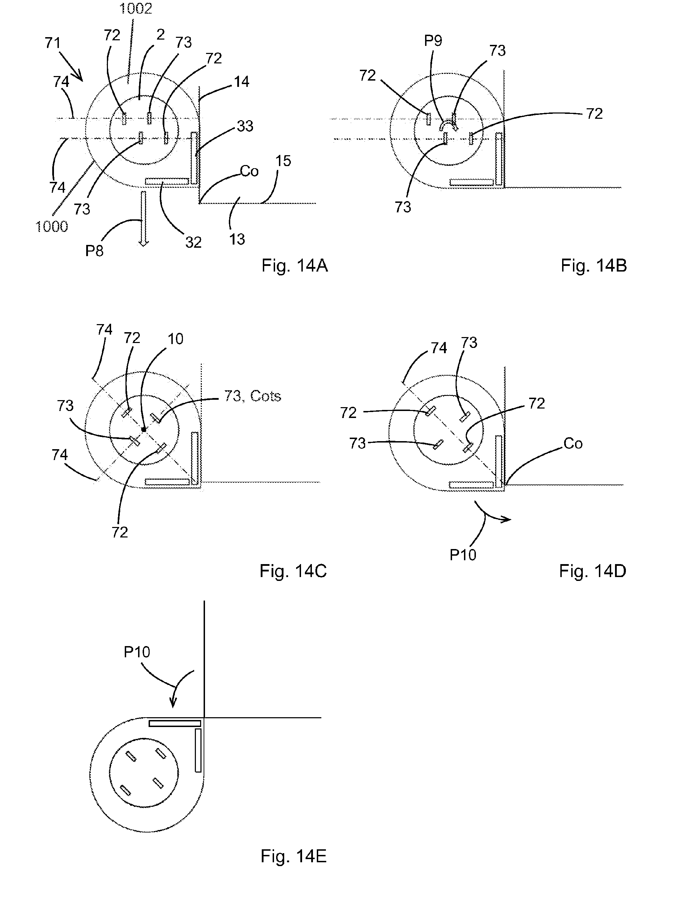

In figures 14A-14E the cleaning of a surface around a corner of an object 13 by means of a cleaning device 71 is shown. The cleaning device 71 differs from the cleaning device 31 in that the cleaning device 71 is provided with a base 2 comprising four wheels 72, 73 located at a distance of each other and of the pivot axis 10. Each wheel 72, 73 is swivelable with respect to the base 2 about a swivel axis extending parallel to the pivot axis 10.

The cleaning of a surface around the corner of the object 13 by means of a cleaning device 71 works as follows.

The cleaning device 71 is being moved along the first side 14 of the object 13 (figure 14A) in the direction as indicated by arrow P8, wherein the cleaning nozzle 32 extends perpendicular to the side 14 and all four wheels 72, 74 have the same orientation. Near a corner 16 of the object 13 the wheels 72 are being swivelled in clockwise direction until the rotation axis 74 of the wheels 72 intersects the pivot axis 10. The wheels 73 are being swivelled in counterclockwise direction until the rotation axis 74 of the wheels 73 also intersects the pivot axis 10 (figure 14C).

The base 2 can now on the spot be pivoted about the pivot axis 10 until the rotation axis of the wheels 72 intersect with the corner of the object 13, which corner forms the new centre of curvature C0. Subsequently the wheels 73 are being swivelled in clockwise or counter-clockwise direction until the rotation axes 74 of the wheels 73 extend parallel to the rotation axis of the wheels 72 (figure 14D).

During this re-orientation of the base 2 and the wheels 72, 73, the cleaning nozzles 32, 33 keep standing still.

Following the re-orientation of the base 2, the wheels 72, 73 can now be driven by means of the controller 8 to turn the cleaning device 71 about the centre of curvature C0 in the direction as indicated by arrow P10 until the cleaning nozzle 32 extend perpendicular to the second side 15 (figures 14 D en 14 E).

In the position as shown in figure 14E, the base 2 will be re-orientated with respect to the cleaning nozzles 32, 33 and the object 13, in the same manner as described above, so that the wheels 72, 73 will be directed in a direction extending parallel to the side 15 to move the cleaning device 71 along the side 15.

It is possible to provide the cleaning device with a nozzle drive for pivoting the base with the wheels and the cleaning nozzle with respect to each other. It is also possible to provide the cleaning device with means to couple and decouple the cleaning nozzle to and from the base with the wheels. In the coupled position the cleaning nozzle will perform the same movements as the base. In the decoupled position, the cleaning nozzle can be pivoted with respect to the base, for example by rotating the wheels at the same angular velocity but in opposite directions. The cleaning nozzle will not be moved and will remain at the same position. The coupling and decoupling can be realized, for example by means of electromagnets, clamps, etc.

The cleaning unit can be provided with vacuum means, brushes and other means to clean a surface.

It is also possible that the rotation axis of the wheels does not extend parallel to the surface to be cleaned but are directed to the surface. In such a case the pivot axis can be located in a plane wherein the two rotation axes are located.

It is also possible that the pivot axis is located at a relatively short distance of the rotation axis or axes. Also in such a case the cleaning nozzle can almost kept standing still, whilst the base is being pivot with respect to the cleaning nozzle. While doing a rotation on the spot the centre of curvature Cots is idealiter located on the pivot axis, however, the skilled person will appreciate that there may be an offset between Cots and the pivot axis, i.e. that the centre of curvature of an on the spot rotation Cots and the pivot axis do not exactly coincide. The reason for this is that during an on the spot rotation the perimeter of the cleaning unit is positioned along a wall or an object. During a rotation on the spot the wall or the object will about the cleaning device. If the centre of curvature of an on the spot rotation Cots and the pivot axis do not exactly coincide this may result to some sideward slippage of the wheels for example and to some extra abutment force between the wall and the cleaning device. If the centre of rotation of an on the spot rotation and the pivot axis deviate too much this may result friction between wheels and floor surface and even to marks on the floor or the carpet which is cleaned. The extent to which this is tolerable determines the extent to which the centre of curvature of an on the spot rotation Cots and the pivot axis may not exactly coincide.

It is also possible to use other kind of shapes for the cleaning nozzle like a circular shape, a cylindrical shape etc.

It is also possible to provide a differential gear between the two wheels and to drive and steer the cleaning device by means of the roller 6. Also in this case the wheels can be rotated at different speeds. It is also possible to drive the differential gear and to steer by means of the roller. It is also possible to use different drive means of propulsion like rolls, caterpillars or omni-drives.

Other variations to the disclosed embodiments can be understood and effected by those skilled in the art in practicing the claimed invention, from a study of the drawings, the disclosure, and the appended claims. In the claims, the words like "comprising" and "having" do not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. Cleaning device (1) comprising a base (2) provided with drive means and steering means to drive and steer the cleaning device along a path with a desired centre of curvature (C1, C2, C3) over a surface to be cleaned, which cleaning device (1) further comprises at least a cleaning unit (1002) provided with at least one cleaning nozzle (7), wherein the cleaning nozzle (7) is pivotable with respect to the base (2) about a pivot axis (10), whilst the base (2) is steerable over the surface to be cleaned for pivoting about the centre of curvature (Cots, C1, C2, C3) which is located substantially on the pivot axis (10).

2. Cleaning device (1) according to claim 1, wherein the cleaning unit, (1002) has a perimeter (1000) encompassing the cleaning nozzle (7), whilst the base (2) is steerable over the surface to be cleaned about the centre of curvature (C1, C2, C3) which is located substantially on the perimeter.

3. Cleaning device (1) according to claim 1, wherein the drive means comprises at least two wheels (3, 4) being rotatable about a rotation axis (5), wherein the pivot axis (10) substantially intersects the rotation axis (5) amid the two wheels (3, 4).

4. Cleaning device (1) according to claim 1, 2 or 3, wherein the cleaning nozzle (7) has a rectangular shape extending along a longitudinal axis, wherein the cleaning nozzle (7) is pivotable with respect to the base (2) to a position wherein the centre of curvature (C 1, C2, C3) is located on the longitudinal axis of the cleaning nozzle (7).

5. Cleaning device (1) according to one of the preceding claims, wherein the cleaning device (1) comprises at least one sensor to obtain information about the environment to be cleaned, wherein by means of the sensor and the controller a point in the environment outside the cleaning device (1) is determined to be allocated as the centre of curvature (C1, C2, C3).

6. Cleaning device (1) according to one of the preceding claims, wherein the cleaning nozzle (7) is pivotable with respect to the base (2) over an angle of at least about 90 degrees, preferably at least 180 degrees and more preferably at least 360 degrees.

7. Cleaning device (1) according to one of the preceding claims, wherein the cleaning device (1) comprises at least one supporting roller located at a distance of the wheels (3, 4).

8. Cleaning device (1) according to one of the preceding claims, wherein the cleaning device (1) comprises two rectangular cleaning nozzles (7) extending substantially perpendicular to each other.

9. Cleaning device (1) according to one of the preceding claims, wherein each wheel (3, 4) is provided with a motor, wherein the motors are controllable by means of the controller (8).

10. Method to control a cleaning device (1) comprising a base (2) provided with drive means and steering means to drive and steer the cleaning device along a path with a desired centre of curvature (C1, C2, C3) over a surface to be cleaned, which cleaning device (1) further comprises at least a cleaning unit provided with at least one cleaning nozzle (7), wherein the cleaning nozzle (7) is pivotable with respect to the base (2) about a pivot axis (10), whilst the base (2) is being steered over the surface to be cleaned for pivoting about the centre of curvature (C1, C2, C3) which is located substantially on the pivot axis (10).

11. Method according to claim 10, wherein the cleaning unit has a perimeter encompassing the cleaning nozzle (7), wherein the base (2) is being steered over the surface to be cleaned about the centre of curvature (C1, C2, C3) which is located substantially on the perimeter.

12. Method according to claim 10 or 11, wherein the cleaning nozzle (7) has a rectangular shape extending along a longitudinal axis, wherein the cleaning nozzle (7) is being pivoted with respect to the base (2) to a position wherein the centre of curvature (C 1, C2, C3) is located on the longitudinal axis of the cleaning nozzle (7).

Fig. 1

Fig. 2

Fig. 3

Fig. 4A

Fig. 4B

Fig. 4C

Fig. 4D

Fig. 4E

Fig. 5

Fig. 6

Fig. 7

Fig. 8A

Fig. 8B

Fig. 8C

Fig. 8D

Fig. 9A

Fig. 9B

Fig. 9C

Fig. 9D

Fig. 9E

Fig. 9F

38

4    10, Cots    3

14

5

Co

15

40

39

Fig. 10

Fig. 11A          Fig. 12A          Fig. 13A

41    42    43    51    52    53    63    61

42    43    52    53    62    63

Fig. 11B          Fig. 12B          Fig. 13B

Fig. 14A

Fig. 14B

Fig. 14C

Fig. 14D

Fig. 14E

| | Europäisches Patentamt European Patent Office Office européen des brevets | **EUROPEAN SEARCH REPORT** | **Application Number** EP 10 17 3355 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 720 077 A (NAKAMURA KYOKO [JP] ET AL) 24 February 1998 (1998-02-24) * column 2, line 55 - column 8, line 39 * ----- | 1-7,9,10 | INV. A47L9/00 A47L9/28 |
| X | US 5 440 216 A (KIM TAE-SIG [KR]) 8 August 1995 (1995-08-08) * column 3, line 13 - column 15, line 38; figure 14 * ----- | 1-3,6-8, 10-12 | |
| A | US 2008/016631 A1 (CASEY CHRISTOPHER [US] ET AL) 24 January 2008 (2008-01-24) * paragraphs [0007] - [0029] * ----- | 1-12 | |
| A | WO 2005/079650 A1 (RECKITT BENCKISER UK LTD [GB]; HAMMOND GEOFFREY ROBERT [GB]; LEVINE LA) 1 September 2005 (2005-09-01) * the whole document * ----- | 1-12 | |
| A | US 2004/181896 A1 (EGAWA SAKU [JP] ET AL) 23 September 2004 (2004-09-23) * paragraphs [0006] - [0013] * ----- | 1-12 | TECHNICAL FIELDS SEARCHED (IPC) A47L G05D |

The present search report has been drawn up for all claims

| Place of search | Date of completion of the search | Examiner |
|---|---|---|
| Munich | 11 November 2010 | Martin Gonzalez, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...............................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 10 17 3355

This annex lists the patent family members relating to the patent documents cited in the above-mentioned European search report.
The members are as contained in the European Patent Office EDP file on
The European Patent Office is in no way liable for these particulars which are merely given for the purpose of information.

11-11-2010

| Patent document cited in search report | | Publication date | Patent family member(s) | | Publication date |
|---|---|---|---|---|---|
| US 5720077 | A | 24-02-1998 | JP | 7319542 A | 08-12-1995 |
| US 5440216 | A | 08-08-1995 | DE | 4340771 A1 | 15-12-1994 |
| | | | GB | 2278937 A | 14-12-1994 |
| | | | JP | 3006986 B2 | 07-02-2000 |
| | | | JP | 7008428 A | 13-01-1995 |
| US 2008016631 | A1 | 24-01-2008 | NONE | | |
| WO 2005079650 | A1 | 01-09-2005 | AU | 2005215195 A1 | 01-09-2005 |
| | | | CA | 2554625 A1 | 01-09-2005 |
| | | | EP | 1722665 A1 | 22-11-2006 |
| | | | GB | 2411820 A | 14-09-2005 |
| | | | US | 2009277476 A1 | 12-11-2009 |
| US 2004181896 | A1 | 23-09-2004 | CN | 1535646 A | 13-10-2004 |
| | | | JP | 2004275468 A | 07-10-2004 |

EPO FORM P0459

For more details about this annex : see Official Journal of the European Patent Office, No. 12/82

**EP 2 420 169 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080222837 A1